# EUROPÄISCHE PATENTSCHRIFT

(11) **EP 1 240 681 B1**
(45) Veröffentlichungstag und Bekanntmachung des Hinweises auf die Patenterteilung: **06.12.2006**
(21) Anmeldenummer: 00993462.1
(22) Anmeldetag: 15.12.2000
(51) Int. Cl.: H01M 8/12

(54) **SUBSTRATGESTÜTZTE ELEKTRODEN-ELEKTROLYT-EINHEIT**
SUBSTRATE-PROTECTED ELECTRODE-ELECTROLYTE UNIT
UNITE ELECTRODE-ELECTROLYTE PROTEGEE PAR UN SUBSTRAT

(30) Priorität: 15.12.1999 DE 19960674
(43) Veröffentlichungstag der Anmeldung: 18.09.2002
(73) Patentinhaber: Forschungszentrum Jülich GmbH, 52425 Jülich (DE)
(72) Erfinder: FLESCH, Udo, 52428 Jülich (DE); BUCHKREMER, Hans, Peter, 52525 Heinsberg (DE); BLASS, Günter, 52249 Eschweiler (DE); MESCHKE, Frank, 87474 Buchenberg/Ahegg (DE); STÖVER, Detlev, 52382 Niederzier (DE); STEINBRECH, Rolf, 52428 Jülich (DE)
(74) Vertreter: Naeven, Ralf
(86) Internationale Anmeldenummer: PCT/DE2000/004482
(87) Internationale Veröffentlichungsnummer: WO 2001/045186

(56) Entgegenhaltungen:
- US-A- 5 122 425
- US-A- 5 807 642
- US-A- 5 932 368

## Beschreibung

Die Erfindung betrifft eine substratgestützte Elektroden-Elektrolyt-Einheit, umfassend eine mittels Beschichtung auf ein Substrat aufgebrachte poröse Elektrode und eine mittels Beschichtung auf der Elektrode aufgebrachte Festelektrolytschicht.

Eine in einer Brennstoffzelle einsatzfähige substratgestützte Elektroden-Elektrolyt-Einheit weist neben dem Substrat, der Elektrode und der Festelektrolytschicht noch eine Gegenelektrode auf, die unmittelbar auf der Festelektrolytschicht aufgebracht ist oder auf einer Zwischenschicht, die in stofflicher Hinsicht zwischen der Festelektrolytschicht und der Gegenelektrode vermittelt. Die Porosität von Substrat, zugehöriger Elektrode sowie der Gegenelektrode ermöglichen den Zugang von Brenn- bzw. Oxidationsmittel zur Festelektrolytschicht, durch die ein Ionenaustausch stattfindet. Eine solche Elektroden-Elektrolyt-Einheit ergibt sich aus der auf ein Verfahren zur Herstellung einer dünnen Festelektrolytschicht auf einer porösen Elektrode gerichteten DE 196 09 418 C2 und dem darin zitierten Stand der Technik.

Bei den bekannten Elektroden-Elektrolyt-Einheiten weisen der Festelektrolyt und das Substrat in der Regel unterschiedliche Ausdehnungskoeffizienten auf. Beispielhaft sei hier ein Substrat aus NiO und Yttrium-stabilisiertem Zirkonoxid (YSZ), eine Elektrode aus dem gleichen Material sowie ein Festelektrolyt aus YSZ angenommen. Wegen der unterschiedlichen Materialien für das Substrat bzw. die Anode und die Festelektrolytschicht können sich Probleme bei der Herstellung und weiteren Behandlung der Elektroden-Elektrolyt-Einheit ergeben. So tritt wegen des unterschiedlichen Schrumpfungsverhaltens des Substrates und des Elektrolyten eine erstmalige und nachhaltige, nicht vermeidbare Krümmung bereits während der Herstellung bei einem Kosinterprozess auf. Der Einfluss einer auf der Festelektrolytschicht unmittelbar oder mittelbar aufgebrachten Kathodenschicht auf die Krümmung ist bekanntermaßen in der Regel vernachlässigbar: So weist das Kathodenmaterial an sich bereits ein deutlich geringeres E-Modul auf als die Festelektrolytschicht. So beträgt das E-Modul für das eingangs genannte Substratmaterial bei 25°C 250 GPa, für La_{0.65}Sr_{0.3}MnO₃ als beispielhaftes Kathodenmaterial hingegen 53 GPa. Zudem ist die Kathodenschicht zu etwa 40 % porös. Somit unterscheiden sich die effektiven E-Module von Kathodenschicht und Festelektrolytschicht derart, dass auch bei einer gegenüber der Festelektrolytschicht höheren Schichtdicke die von der Kathodenschicht auf das Substrat ausgeübten Spannkräfte in erster und für die hier anzustellenden Betrachtungen hinreichender Näherung vernachlässigbar sind. Entsprechendes gilt für die Anode, dessen Material in dem genannten Beispiel das gleiche E-Modul wie das Substrat aufweist, nämlich 64 GPa, und wie die Kathodenschicht hochporös ist. Typischerweise können die Schichtdicken für den Festelektrolyten 2µm bis 50µm, für die Anode 2 bis 50 µm, für die Kathode 20µm bis 100µm und für das Substrat 200µm bis 2000µm betragen.

Die Elektroden-Elektrolyt-Einheit kann unter Krafteinwirkung bei hohen Temperaturen wieder weitgehend geebnet werden. Das unterschiedliche thermische Ausdehnungsverhalten bewirkt jedoch bei Temperaturänderungen, etwa dem Abkühlen, eine sogenannte thermoelastische Verkrümmung, für die wiederum in erster Näherung allein die Unterschiede im thermischen Ausdehnungs- und Schrumpfungsverhalten zwischen Festelektrolyt und Substrat verantwortlich sind. Durch diese Gestaltänderung verkompliziert sich im hohen Maße das Assemblieren, d.h. das Kontaktieren der Elektroden-Elektrolyt-Einheit zwischen den Interkonnektoren eines Brennstoffzellenstapels. In der Regel müssen hohe Fügelasten für eine zuverlässige Kontaktierung aufgewendet werden. Bei Elektroden-Elektrolyt-Einheiten mit NiO-Anteilen in Substrat und/oder Elektrode ist nach dem Einbau in den Stapel zusätzlich eine Reduktion des NiO zu Ni notwendig, damit das Substrat und die Elektrode leitend werden. Diese Reduktion führt zu einer weiteren Verkrümmung der Elektroden-Elektrolyt-Einheit, bei der es zum Aufbrechen der beim Assemblieren hergestellten elektrischen Kontakte zwischen Interkonnektor und Elektroden-Elektrolyt-Einheit kommen kann. Das "thermoelastische Eigenleben" und das Reduktionsverhalten der Elektroden-Elektrolyt-Einheit können eine gravierende Funktionsbeeinträchtigung der Brennstoffzelle zur Folge haben.

Es ist nun Aufgabe der vorliegenden Erfindung, eine Elektroden-Elektrolyt-Einheit zur Verfügung zu stellen, mit der die vorgenannten Nachteile vermieden werden können und die keine Gestaltänderung bei Temperaturwechsel zeigt.

Bei einer Elektroden-Elektrolyt-Einheit der eingangs genannten Art wird diese Aufgabe dadurch gelöst, dass auf der der Festelektrolytschicht abgewandten Seite des Substrats eine zumindest stellenweise für ein einzusetzendes fluides Brenn- oder Oxidationsmittel durchlässige Spannungsausgleichsschicht aufgebracht ist, wobei die Spannungsausgleichsschicht und die Festelektrolytschicht in einem für die Herstellung und für den Betrieb der Elektroden-Elektrolyt-Einheit notwendigen Temperaturbereich ein im wesentlichen gleiches thermisch bedingtes Ausdehnungs- und Schrumpfungsverhalten aufweisen.

Da damit auf beiden Seiten des Substrats im thermischen Verhalten übereinstimmende Schichten aufgebracht sind, also ein symmetrischer Aufbau gegeben ist, können Krümmungen der substratgestützten Elektroden-Elektrolyt-Einheit aufgrund von unterschiedlichen Ausdehnungs- und Schrumpfungsverhalten weitgehend unterbunden werden. Es wird erreicht, dass die von der Festelektrolytschicht und die von der Spannungsausgleichsschicht auf das Substrat wirkenden Kräfte im Betrag etwa gleich sind und sich somit aufheben. Der Temperaturbereich, bei dem das im wesentliche gleiche thermisch bedingtes Ausdehnungs- und Schrumpfungsverhalten vorliegen sollte liegt typischerweise zwischen Raumtemperatur und etwa 1000°C. Je nach Herstellungs- und Betriebsart können auch höhere Temperaturbereiche maßgeblich sein.

Die erfindungsgemäße Elektroden-Elektrolyt-Einheit kann auch so ausgebildet sein, dass die Spannungsausgleichsschicht eine geschlossene, durchgehende Löcher aufweisende Netzwerkstruktur bildet. Bereits die Löcher bewirken eine Fluiddurchlässigkeit der Spannungsausgleichsschicht. Hierdurch kann eine hinreichende Brenn- oder Oxidationsmittelzufuhr auch dann gewährleistet werden, wenn das Material der Spannungsausgleichsschicht an sich für das eingesetzte Fluid nicht durchlässig ist. Dies ist zum Beispiel dann gegeben, wenn die erfindungsgemäße Elektroden-Elektrolyt-Einheit so ausgebildet wird, dass die Spannungsausgleichsschicht aus dem gleichen Material besteht wie die Festelektrolytschicht. In diesem Fall ist übereinstimmendes Ausdehnungs- und Schrumpfungsverhalten von Festelektrolytschicht und Spannungsausgleichsschicht gewährleistet. Damit die bei Ausdehnung oder Schrumpfung von der Spannungsausgleichsschicht auf das Substrat wirkenden Spannungskräfte denen von der Elektrolytschicht ausgehenden im wesentlichen gleich sind, sollte die Spannungsausgleichsschicht wegen der dort vorhandenen Löcher und dem damit verbundenen niedrigeren effektiven E-Modul stärker ausgebildet werden als die Elektrolytschicht. Der Unterschied in den Schichtdicken sollte dabei mit wachsendem Anteil der Lochfläche und Porosität an der gesamten Spannungsausgleichsschicht zunehmen. Bei gleichen Materialien für Festelektrolytschicht und Spannungsausgleichsschicht könnte es sinnvoll sein, in etwa das gleiche Schichtvolumen einzustellen, damit die Spannkräfte im Betrag einander gleich sind. Bei gegebenen Kennwerten kann die notwendige Schichtdicke der Spannungsausgleichsschicht auch berechnet werden.

Weiterhin kann die erfindungsgemäße Elektroden-Elektrolyt-Einheit so ausgebildet sein, dass die von den Löchern gebildete Durchtrittsfläche für Brenn- oder Oxidationsmittel pro Flächeneinheit in Strömungsrichtung der Brenn- oder Oxidationsmittel gesehen zunimmt. Hierdurch kann erreicht werden, dass das noch unverbrauchte Brenn- oder Oxidationsmittel lateral so verteilt wird, dass sich eine homogene Brennmittelverteilung oder unter Berücksichtigung einer endothermen Reformierungsreaktion und der exothermen Brennmitteloxidation eine gleichmäßige Temperaturverteilung in Substrat und Elektrode einstellt. Wäre die Durchtrittsfläche gleichmäßig über die Spannungsausgleichsschicht verteilt, würde in Strömungsrichtung gesehen im vorderen Bereich der Elektrode mehr Brenn- oder Oxidationsmittel umgesetzt werden als im hinteren Bereich. Geht man zum Beispiel von Methan als Brennmittel aus, würde an der Elektrode, die dann als Anode fungiert, eine Aufspaltung des Methans in Wasserstoff und Kohlenmonoxid katalysiert. Diese Reaktion ist sehr endotherm, so dass bei einer ungleichmäßigen Verteilung des noch unverbrauchten Methans eine entsprechend ungleichmäßige laterale Temperaturverteilung in der Elektroden-Elektrolyt-Einheit entstehen würde. Auch die sehr exotherme Brennmitteloxidation kann zu einer ungleichmäßigen Temperaturverteilung aufgrund ungleichmäßiger Zuführung der Brenn- und Oxidationsmittel führen. Damit auch auf der der Spannungsausgleichsschicht gegenüberliegenden Seite der Elektroden-Elektrolyt-Einheit eine entsprechende Verteilung der Zufuhr des Brenn- oder Oxidationsmittels erreicht wird, kann dort eine plattenförmige, ebenfalls mit Löchern versehene Abdeckung der Gegenelektrode angebracht sein. In Strömungsrichtung der Brenn- oder Oxidationsmittel gesehen sollte die Durchtrittsfläche pro Flächeneinheit von Anfang bis Ende der Elektroden-Elektrolyt-Einheit mindestens 10%, bevorzugt mehr als 100% betragen. Die Zunahme der Durchtrittsflächendichte kann durch eine zunehmende Lochdichte und/oder eine Vergrößerung der Lochflächen erreicht werden. In diesem Zusammenhang wird auf den Offenbarungsgehalt der deutschen Patentanmeldung 198 53 911.8-45 verwiesen, die eine Abdeckung einer Elektroden-Elektrolyt-Einheit mit Lochblechen zur Beeinflussung der Verteilung von Brenn- oder Oxidationsmittel betrifft und am Anmeldetag der hier betroffenen Patentanmeldung noch nicht veröffentlicht war. Es ist auch möglich, dass - z.B. aufgrund spezieller geometrischer Gegebenheiten - eine andere als die in Anspruch 4 dargelegte Änderung der Durchtrittsfläche pro Flächeneinheit notwendig ist, um eine laterale Gleichverteilung des unverbrauchten Brennmittels oder der Substrat- bzw. Anodentemperatur zu erreichen. Beispielsweise kann es bei Brennstoffzellenstapeln im Cross-Flow-Aufbau, d.h. mit gekreuzten Strömungsrichtungen von Brennmittel und Oxidationsmittel, sinnvoll sein, den Zuwachs der Durchtrittsfläche pro Flächeneinheit nicht in Strömungsrichtung sondern in Richtung der Winkelhalbierenden zwischen den Strömungsrichtungen oder in dazwischen liegenden Richtungen vorzusehen. Möglicherweise ist es vorteilhaft, die Durchtrittsfläche pro Flächeneinheit in einer bestimmten Richtung nicht nur stetig anwachsen zu lassen, sondern streckenweise konstant zu halten oder abfallen zu lassen.

Die erfindungsgemäße Elektroden-Elektrolyt-Einheit kann auch so ausgebildet sein, dass die Löcher im wesentlichen unregelmäßig, z.B. zumindestens innerhalb von Teilbereichen der Spannungsausgleichsschicht statistisch, über die Spannungsausgleichsschicht verteilt sind. Eine geordnete Verteilung der Löcher, zum Beispiel in Reihen mit konstantem Abstand, könnte bei einem Ausdehnungs- oder Schrumpfungsprozess zu einer entsprechend wellenförmig verzogenen Elektroden-Elektrolyt-Einheit führen. Zumindest bei einer hohen Anzahl von Löchern kann insbesondere eine statistische Verteilung derartige Effekte verhindern. Im Falle einer in Strömungsrichtung des Brenn- oder Oxidationsmittels zunehmenden Durchtrittsfläche pro Flächeneinheit können in unterschiedlichen Teilbereichen der Spannungsausgleichsschicht die Löcher z.B. unterschiedliche Durchmesser aufweisen oder in unterschiedlicher Dichte vorliegen. Innerhalb jedes Teilbereichs kann die Verteilung der Löcher wiederum statistisch sein.

Die erfindungsgemäße Elektroden-Elektrolyt-Einheit kann auch so ausgebildet sein, dass das Substrat in die Löcher der Spannungsausgleichsschicht hineinragt. Das Substrat muss in der Brennstoffzelle elektrisch kontaktiert werden. Dies kann durch die Löcher hindurch mit einem metallischen Netz, zum Beispiel aus Nickel, erfolgen. Wenn das Substrat an den Orten der Löcher erhöht ist, also in die Löcher hineinragt, wird die Kontaktierung erleichtert.

Weiterhin kann die erfindungsgemäße Elektroden-Elektrolyt-Einheit so ausgebildet sein, dass die Spannungsausgleichsschicht aus einem porösen Material besteht. In diesem Fall kann die Zufuhr des Brenn- oder Oxidationsmittels durch die Poren der Spannungsausgleichsschicht erfolgen. Zusätzliche Löcher sind dann nicht erforderlich, wenn die Spannungsausgleichsschicht elektrisch leitend ist. Ansonsten sind Löcher für die elektrische Kontaktierung des Substrats vorzusehen.

Dabei kann die erfindungsgemäße Elektroden-Elektrolyt-Einheit auch so ausgebildet sein, dass die Porosität in Strömungsrichtung eines Brenn- oder Oxidationsmittels gesehen zunimmt. Hierdurch kann eine laterale Gleichverteilung der Brenn- oder Oxidationsmittel bzw. der Temperatur auch dann erreicht werden, wenn in der Spannungsausgleichsschicht keine Löcher vorgesehen sind. Im übrigen wird auf die Ausführungen zur Ausbildungsform gemäß Anspruch 4 verwiesen. Insbesondere können auch hier andere Varianten der Porositätsänderung entsprechend zu den oben dargestellten Alternativen in der Änderung der Durchtrittsfläche pro Flächeneinheit vorgesehen werden.

Schließlich kann die erfindungsgemäße Elektroden-Elektrolyt-Einheit auch so ausgebildet sein, dass die unmittelbar auf das Substrat aufgebrachte Elektrode als Anode dient.

Im folgenden ist eine vorteilhafte Ausbildungsform der erfindungsgemäßen Elektroden-Elektrolyt-Einheit anhand von Figuren dargestellt.

Es zeigt schematisch:
- Fig. 1:: den aus Substrat, Anode, Festelektrolytschicht und Spannungsausgleichsschicht bestehenden Teil einer Elektroden-Elektrolyt-Einheit in Aufsicht auf die Festelektrolytschicht, im seitlichen Querschnitt und in Aufsicht auf die Spannungsausgleichsschicht und
- Fig. 2:: ausschnittsweise die Elektroden-Elektrolyt-Einheit zwischen zwei Interkonnektoren eines Brennstoffzellenstapels im Co-Flow-Aufbau.

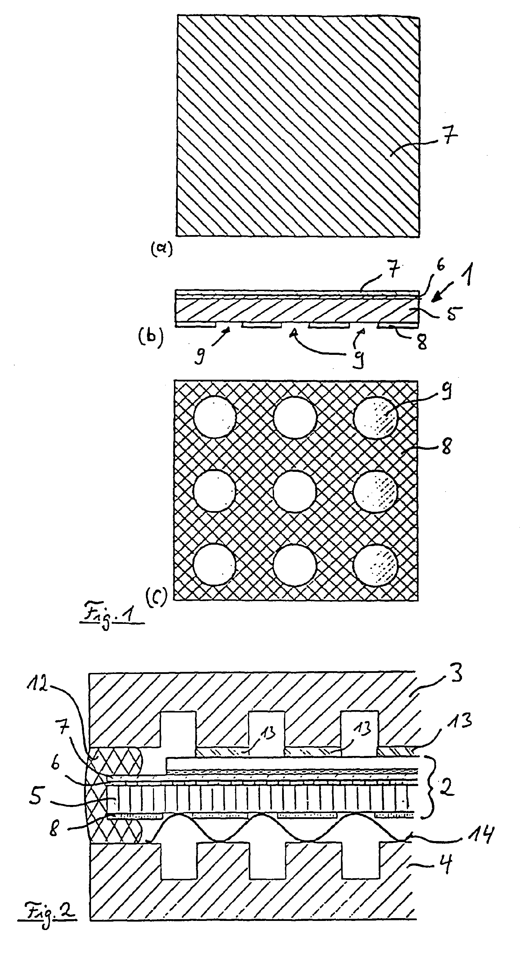

Figur 1 (b) zeigt im seitlichen Querschnitt eine Teileinheit 1 einer Elektroden-Elektrolyt-Einheit 2, wie sie in Figur 2, eingebaut zwischen zwei Interkonnektoren 3 und 4 eines Brennstoffzellenstapels, dargestellt ist. Die Teileinheit 1 besteht aus einem Substrat 5, einer Anode 6, einer Festelektrolytschicht 7 und einer Spannungsausgleichsschicht 8, in der Löcher 9 vorhanden sind. Figur 1 (a) zeigt die Teileinheit 1 in Aufsicht auf die Festelektrolytschicht 7, Figur 1 (c) mit Sicht auf die die Löcher 9 aufweisende Spannungsausgleichsschicht 8. In dem in Figur 1 dargestellten Herstellungsstadium der Elektroden-Elektrolyt-Einheit 2 besteht das Substrat aus Yttrium-stabilisiertem Zirkonoxid (YZS), d. h. im vorliegenden Falle aus ZrO₂ + 8 mol% Y₂O₃, und NiO. Das Substrat wird mit dem CoatMix^{®}-Verfahren aus einem Pulver durch uniaxiales Warmpressen, Entbindern und Vorsintern hergestellt und weist eine Porosität von etwa 30% auf. Das CoatMix^{®}-Verfahren ist in der DE 196 18 815 A1 offenbart. Die etwa 5 µm dicke Anode 6 besteht aus dem gleichen Material und ist mittels Vakuum-Schlicker-Guss-Verfahren (VSG-Verfahren, siehe DE 196 09 418 C2) auf das etwa 500 µm bis 1500 µm dicke Substrat aufgebracht worden. Beim VSG-Verfahren wird das NiO und YSZ zusammen mit einem Binder in einer Suspension auf das Substrat gebracht. Das Lösungsmittel der Suspension, zum Beispiel Ethanol, kann durch das poröse Substrat 5 hindurch abfließen und verdampfen. Die Substrat-Anode-Einheit wird getrocknet sowie in einem Schritt entbindert und vorgesintert.

Anschließend wird die aus YSZ bestehende Festelektrolytschicht 7 ebenfalls durch das VSG-Verfahren aufgebracht. Die Sinterung wird bei etwa 1000°C durchgeführt. Hiernach wird, wiederum im VSG-Verfahren die Spannungsausgleichsschicht 8 auf das Substrat 5 gebracht. Die Festelektrolytschicht 7 ist nach der bisherigen Behandlung noch porös, so dass das Lösungsmittel der Suspension durch Substrat 5, Anode 6 und Festelektrolytschicht 7 hindurchfließen kann. Die Löcher 9 werden bereitgestellt, indem beim Aufbringen der Suspension für die Spannungsausgleichsschicht 8 die entsprechenden Stellen z. B. mit einem Kleber, einem Harz, einem Wachs, einfachen Papieraufklebern, oder auch mit einer mechanischen Maske oder Stempeln aus flexiblen Material abgedeckt werden.

Anschließend wird die Teileinheit 1 bei 1300°C bis 1400°C gesintert, wobei das auf das Substrat aufgebrachte Material zur Herstellung der Löcher 9 rückstandslos verbrennen muss.

Alternativ zum VSG-Verfahren ist es auch möglich, die Festelektrolytschicht 7 und die Spannungsausgleichsschicht 8 durch Siebdruck, Schablonendruck oder WPS (Wet Powder Spraying oder Nasspulverspritzen) aufzubringen. Das WPS-Verfahren ist im deutschen Patent DE 41 20 706 C2 offenbart. Im Falle der Herstellung der Spannungsausgleichsschicht 8 durch das Siebdruckverfahren wäre das Sieb dort abzudecken, wo die Löcher 9 entstehen sollen. Bei Anwendung des WPS-Verfahrens ist das Substrat 5 an den Stellen der Löcher 9 so wie beim VPS-Verfahren abzudecken.

Um die komplette Elektroden-Elektrolyt-Einheit 2 zu erhalten, wird auf die Festelektrolytschicht 7 noch mittels Nasspulverspritzen (WPS) eine Kathodenzwischenschicht 10 (ca. 10 µm) aus La_{0.65}Sr_{0.3}MnO₃ und YSZ sowie eine Kathodenschicht 11 (ca. 40 µm) aus La_{0.65}Sr_{0.3}MnO₃ aufgebracht. Die Elektroden-Elektrolyt-Einheit 2 wird nun mittels eines Dichtungsmaterials 12, z.B. Glaslot zwischen die Interkonnektoren 3 und 4 eines Brennstoffzellenstapels eingebaut (Figur 2).

Nach dem Einbau wird die Elektroden-Elektrolyt-Einheit 2 einem Reduziervorgang zur Reduktion des NiO zu Ni unterworfen, damit Substrat 5 und Anode 6 elektrisch leitend werden. Kontaktschichten 13 sorgen für einen elektrischen Kontakt zwischen Kathodenschicht 11 und Interkonnektor 3, während der elektrische Kontakt zwischen dem Substrat 5 und dem Interkonnektor 4 mittels eines Metallnetzes 14, z.B. aus Nickel hergestellt wird, dessen Drähte oder durch Prägung eingebrachte Wölbungen in die Löcher 9 der Spannungsausgleichsschicht 8 hineinragen.

### Bezugszeichenliste

- 1: Teileinheit
- 2: Elektroden-Elektrolyt-Einheit
- 3: Interkonnektor
- 4: Interkonnektor
- 5: Substrat
- 6: Anode
- 7: Festelektrolytschicht
- 8: Spannungsausgleichsschicht
- 9: Loch
- 10: Kathodenzwischenschicht
- 11: Kathodenschicht
- 12: Dichtungsmaterial
- 13: Kontaktschicht
- 14: Metallnetz

## Patentansprüche

1. Substratgestützte Elektroden-Elektrolyt-Einheit, umfassend eine mittels Beschichtung auf ein Substrat (5) aufgebrachte poröse Elektrode (6) und eine mittels Beschichtung auf der Elektrode aufgebrachte Festelektrolytschicht (7),
**dadurch gekennzeichnet, dass**
auf der der Festelektrolytschicht (7) abgewandten Seite des Substrats (5) eine zumindest stellenweise für ein einzusetzendes fluides Brenn- oder Oxidationsmittel durchlässige Spannungsausgleichsschicht (8) aufgebracht ist, wobei die Spannungsausgleichsschicht (8) und die Festelektrolytschicht (7) in einem für die Herstellung und für den Betrieb der Elektroden-Elektrolyt-Einheit notwendigen Temperaturbereich ein im wesentlichen gleiches thermisch bedingtes Ausdehnungs- und Schrumpfungsverhalten aufweisen.

2. Elektroden-Elektrolyt-Einheit nach Anspruch 1, **dadurch gekennzeichnet, dass** die Spannungsausgleichsschicht (8) eine geschlossene, durchgehende Löcher (9) aufweisende Netzwerkstruktur bildet.

3. Elektroden-Elektrolyt-Einheit nach Anspruch 2, **dadurch gekennzeichnet, dass** die Spannungsausgleichsschicht (8) aus dem gleichen Material besteht wie die Festelektrolytschicht (7).

4. Elektroden-Elektrolyt-Einheit nach Anspruch 2 oder 3, **dadurch gekennzeichnet, dass** die von den Löchern (9) gebildete Durchtrittsfläche für Brenn- oder Oxidationsmittel pro Flächeneinheit in Strömungsrichtung der Brenn- oder Oxidationsmittel gesehen zunimmt.

5. Elektroden-Elektrolyt-Einheit nach einem der Ansprüche 2 bis 4, **dadurch gekennzeichnet, dass** die Löcher (9) im wesentlichen unregelmäßig, z.B. zumindestens innerhalb von Teilbereichen der Spannungsausgleichsschicht (8) statistisch, über die Spannungsausgleichsschicht (8) verteilt sind.

6. Elektroden-Elektrolyt-Einheit nach einem der Ansprüche 2 bis 5, **dadurch gekennzeichnet, dass** das Substrat (5) in die Löcher (9) der Spannungsausgleichsschicht (8) hineinragt.

7. Elektroden-Elektrolyt-Einheit nach Anspruch 1, **dadurch gekennzeichnet, dass** die Spannungsausgleichsschicht (8) aus einem porösen Material besteht.

8. Elektroden-Elektrolyt-Einheit nach Anspruch 7, **dadurch gekennzeichnet, dass** die Porosität in Strömungsrichtung eines Brenn- oder Oxidationsmittels gesehen zunimmt.

9. Elektroden-Elektrolyt-Einheit nach einem der Ansprüche 1 bis 8, **dadurch gekennzeichnet, dass** die unmittelbar auf das Substrat (5) aufgebrachte Elektrode (6) als Anode dient.

## Claims

1. Substrate-supported electrode electrolyte assembly, comprising a porous electrode (6), which has been applied to a substrate (5) by means of coating, and a solid electrolyte layer (7), which has been applied to the electrode by means of coating, **characterized in that** a stress compensation layer (8), which is at least in places permeable to a fluid combustible or oxidant to be used, has been applied to that side of the substrate (5) which is remote from the solid electrolyte layer (7), the stress compensation layer (8) and the solid electrolyte layer (7) having substantially identical thermally induced expansion and contraction properties in a temperature range which is required for production and operation of the electrode electrolyte assembly.

2. Electrode electrolyte assembly according to claim 1, **characterized in that** the stress compensation layer (8) forms a continuous network structure which has through-holes (9).

3. Electrode electrolyte assembly according to claim 2, **characterized in that** the stress compensation layer (8) consists of the same material as the solid electrolyte layer (7).

4. Electrode electrolyte assembly according to claim 2 or 3, **characterized in that** the passage area for combustibles or oxidants formed by the holes (9) per unit area increases in the direction of flow of the combustibles or oxidants.

5. Electrode electrolyte assembly according to one of claims 2 to 4, **characterized in that** the holes (9) are distributed substantially irregularly over the stress compensation layer (8), e.g. randomly at least within subregions of the stress compensation layer (8).

6. Electrode electrolyte assembly according to one of claims 2 to 5, **characterized in that** the substrate (5) projects into the holes (9) in the stress compensation layer (8).

7. Electrode electrolyte assembly according to claim 1, **characterized in that** the stress compensation layer (8) consists of a porous material.

8. Electrode electrolyte assembly according to claim 7, **characterized in that** the porosity increases in the direction of flow of a combustible or oxidant.

9. Electrode electrolyte assembly according to one of claims 1 to 8, **characterized in that** the electrode (6) which is applied directly to the substrate (5) serves as an anode.

## Revendications

1. Unité électrode-électrolyte soutenue par un substrat, comprenant une électrode poreuse (6) appliquée par déposition sur un substrat (5) et une couche (7) d'électrolyte solide appliquée par déposition sur l'électrode,
**caractérisée en ce que**
une couche (8) d'équilibrage de tension, perméable au moins par endroits à un carburant ou à un agent d'oxydation, est appliquée sur le côté du substrat (5) qui n'est pas tourné vers la couche (7) d'électrolyte solide, la couche (8) d'équilibrage de tension et la couche (7) d'électrolyte solide présentant dans une gamme de température nécessaire pour la fabrication et le fonctionnement de l'unité électrode-électrolyte essentiellement le même comportement de dilatation et de contraction sous l'action de la chaleur.

2. Unité électrode-électrolyte selon la revendication 1, **caractérisée en ce que** la couche (8) d'équilibrage de tension forme une structure réticulée fermée traversée par des trous (9).

3. Unité électrode-électrolyte selon la revendication 2, **caractérisée en ce que** la couche (8) d'équilibrage de tension est constituée du même matériau que la couche (7) d'électrolyte solide.

4. Unité électrode-électrolyte selon les revendications 2 ou 3, **caractérisée en ce que** la surface de passage formée par les trous (9) prévus pour le carburant ou l'agent d'oxydation par unité de surface augmente dans la direction d'écoulement du carburant ou de l'agent d'oxydation.

5. Unité électrode-électrolyte selon l'une des revendications 2 à 4, **caractérisée en ce** les trous (9) sont répartis sur la couche (8) d'équilibrage de tension de manière essentiellement irrégulière, par exemple statistiquement au moins dans des parties de la couche (8) d'équilibrage de tension.

6. Unité électrode-électrolyte selon l'une des revendications 2 à 5, **caractérisée en ce que** le substrat (5) pénètre dans les trous (9) de la couche (8) d'équilibrage de tension.

7. Unité électrode-électrolyte selon la revendication 1, **caractérisée en ce que** la couche (8) d'équilibrage de tension est constituée d'un matériau poreux.

8. Unité électrode-électrolyte selon la revendication 7, **caractérisée en ce que** la porosité augmente dans la direction d'écoulement d'un carburant ou d'un agent d'oxydation.

9. Unité électrode-électrolyte selon l'une des revendications 1 à 8, **caractérisée en ce que** l'électrode (6) appliquée directement sur le substrat (5) sert d'anode.
